# EUROPÄISCHE PATENTANMELDUNG

(11) **EP 1 295 855 A1**
(43) Veröffentlichungstag der Anmeldung: **26.03.2003**
(21) Anmeldenummer: 02020095.2
(22) Anmeldetag: 07.09.2002
(51) Int. Cl.: C03C 17/10, C04B 41/88

(54) **Glanzedelmetallpräparat**

(30) Priorität: 21.09.2001 DE 10146684
(71) Anmelder: W.C. Heraeus GmbH & Co. KG, 63450 Hanau (DE)
(72) Erfinder: Lukas, Annette, 63517 Rodenbach (DE); Wenzel, Patrick, 63808 Haibach (DE)
(74) Vertreter: Kühn, Hans-Christian

(57) **Zusammenfassung**

Glanzedelmetallpräparat zum Einbrennen auf Glas-, Email-, Keramik- und Porzellan-Oberflächen bei einer Maximaltemperatur von kleiner oder kleiner/gleich + 900° C, bestehend aus einer oder mehreren organischen Edelmetallverbindungen, mindestens einem Flussmittel aus organischen und/oder anorganischen Metallverbindungen und mindestens einem Träger, dadurch gekennzeichnet, dass das Glanzedelmetallpräparat
- rhodiumfrei ist oder über verunreinigende Spuren bis maximal 0,0003 Mol Rh pro Mol Edelmetall enthält,
- mindestens eine organische Gold-, Platin-, Silber- oder Palladium-Verbindung enthält,
- Indium in Form mindestens einer organischen und/oder anorganischen Verbindung aufweist, wobei der Indiumgehalt 0,001 bis 0,25 Mol pro Mol Edelmetall beträgt,
- der Edelmetallgehalt, bezogen auf das Präparat, im Bereich von 6 bis 20 Gewichts-% liegt, und
- chromfrei ist, wobei darüber hinaus das Präparat silizium- und calciumfrei oder silizium-, calcium- und bismutfrei oder silizium- und bismutfrei ist.

## Beschreibung

Die Erfindung betrifft ein Glanzedelmetallpräparat zum Einbrennen auf Glas-, Email-, Keramikund Porzellan-Oberflächen bei einer Maximaltemperatur von kleiner oder kleiner/gleich + 900° C, bestehend aus einer oder mehreren organischen Edelmetallverbindungen, mindestens einem Flussmittel aus organischen und/oder anorganischen Metallverbindungen und mindestens einem Träger.

Weiterhin betrifft die Erfindung ein Verfahren zur Herstellung von dekorierten Glas-, Email-, Keramik- und Porzellan-Oberflächen aufweisenden Gegenständen durch Einbrennen eines Glanzedelmetallpräparates, mehrere Verwendungen eines Glanzedelmetallpräparates sowie mehrere Verwendungen von Indium.

Glanzedelmetallpräparate zur Dekoration von Glas, Keramik, Porzellan, Bone-China, Fliesen oder anderen silikatischen Substraten bestehen in der Regel aus Lösungen organischer Gold-, Silber-, Palladium- und Platinverbindungen, die in zumeist organischen Trägermaterialien gelöst sind, Kunst- oder Naturharzen sowie Flussmitteln, die die Haftfestigkeit auf dem jeweiligen Trägermaterial sicherstellen. Als Flussmittel werden üblicherweise bestimmte organische Metallverbindungen, z.B. Alkohole, Carboxylate, Resinate oder Sulforesinate der Elemente Rhodium, Silber, Chrom, Wismut, Vanadium, Silicium usw. verwendet. Beim Einbrennen zersetzen sich die organischen Verbindungen zu den jeweiligen Oxiden oder Metallen, wodurch die Haftfestigkeit des Metallfilms auf dem Substrat bewirkt wird.

Die üblicherweise zur Dekoration verwendeten Glanzedelmetallpräparate werden bei Einbrenntemperaturen von ca. 700 °C bis 900 °C auf Keramik, Porzellan, Fliesen oder Bone-China eingebrannt, in Ausnahmefällen auch bis ca. 1.250 °C. Für Glas sind Temperaturen üblich, die im Bereich zwischen ca. 450 ° C und ca. 650 °C liegen.

Die Ausbildung von Glanzedelmetallfilmen wurde 1879 von Heinrich Roessler entdeckt. Er fand heraus, dass durch die Zugabe von Rhodium die Beschaffenheit eines geschlossenen hochglänzenden Metallfilms ermöglicht wird. Üblicherweise werden 0,003 - 0,04 Mol Rhodium pro Mol Gold eingesetzt. Für die Entstehung solcher Glanzedelmetallfilme ist das sich bildende Rhodiumoxid verantwortlich, welches durch organische Rhodiumverbindungen in oxidativer Atmosphäre entsteht (Degussa AG, Frankfurt, 2. Auflage, Hüthig-Verlag, Heidelberg (1995), Seiten: 335 - 339). Es verhindert das Kornwachstum und Agglomerieren der sich aus den Goldverbindungen beim Einbrand bildenden Edelmetall-Partikel (insbesondere Goldpartikel). Diese würden durch diffuse Reflektion des auftretenden Lichtes einen Matteffekt hervorrufen.

In EP 1 043 294 B1 wird ein Glanzedelmetallpräparat zum Einbrennen auf Keramik-/Porzellan-Oberflächen bei einer Minimaltemperatur von + 900 °C, insbesondere auf Fliesen, bereitgestellt, das aus einer oder mehreren organischen Edelmetallverbindungen, mindestens einem Flussmittel aus organischen Metallverbindungen und mindestens einem Träger besteht, wobei das Glanzedelmetallpräparat rhodiumfrei ist, mindestens eine organische Gold-, Silber- oder Palladium-Verbindung enthält, Chrom in Form mindestens einer organischen Verbindung aufweist, wobei der Chrom-Gehalt 0,01 bis 1,0 Mol pro Mol Edelmetall beträgt, und der Edelmetallgehalt, bezogen auf das Präparat, im Bereich von 6 bis 20 Gewichts-% liegt.

In US 5,931,992 wird ein Goldpräparat für die Aufglasurdekoration offenbart, das sich aus 60 bis 90 Gewichts-% Gold, 3 bis 15 Gewichts-% Silizium, 2 bis 11 Gewichts-% Indium und 2 bis 14 Gewichts-% Calcium (zusammen 100 %) und einem Rest an üblichen Bestandteilen zusammensetzt, wobei die Metalle in Form von organischen Verbindungen eingebracht werden.

In JP 62-105990 A wird ein Goldpräparat vorgestellt, das aus 5,0 bis 11,0 Gewichts-% Gold, 0,1 bis 1,0 Gewichts-% Bismut, 0,1 bis 0,5 Gewichts-% Indium und 0,2 bis 1,3 Gewichts-% Silizium sowie einem Rest aus einer Harzlösung und einem Lösemittel besteht.

Das der Erfindung zugrundeliegende Problem besteht darin, ein möglichst bezogen auf die Metallpreise kostengünstiges Glanzedelmetallpräparat zum Einbrennen auf Glas-, Email-, Keramik- und Porzellan-Oberflächen bei einer Maximaltemperatur von kleiner/gleich + 900 ° C bereitzustellen, bei dem auf das sehr teure Metall Rhodium verzichtet werden kann und das besonders einbrennstabil ist und besonders intensive bzw. hellglänzende, mechanisch und chemisch besonders beständige Edelmetallfilme, insbesondere Goldfilme, nach dem Einbrennen liefert.

Dieses Problem wird erfindungsgemäß durch ein Glanzedelmetallpräparat nach Anspruch 1, Verfahren nach den Ansprüchen 6 und 11 und Verwendungen nach den Ansprüchen 7 bis 10 gelöst.

Das erfindungsgemäße Glanzedelmetallpräparat ist rhodiumfrei oder enthält über verunreinigende Spuren bis maximal 0,0003 Mol Rh pro Mol Edelmetall. Weiterhin ist mindestens eine organische Gold-, Platin-, Silber- oder Palladium-Verbindung enthalten. Das Präparat weist Indium in Form mindestens einer organischen und/oder anorganischen Verbindung auf, wobei der Indiumgehalt 0,001 bis 0,25 Mol pro Mol Edelmetall beträgt. Der Edelmetallgehalt, bezogen auf das Präparat, liegt im Bereich von 6 bis 20 Gewichts-%. Schließlich ist das Präparat chromfrei. Darüber hinaus ist dieses silizium- und calciumfrei (1.Fall) oder silizium-, calcium- und bismutfrei (2. Fall) oder silizium- und bismutfrei (3. Fall). Erfindungsgemäß sind daher auch solche Präparate, die unter Berücksichtigung der anderen obengenannten Merkmale chromfrei sind und beispielsweise nur Silizium oder nur Bismut enthalten.

Kern der Erfindung ist die überraschende Tatsache, dass entgegen der existierenden Lehre rhodiumfreie Präparate bei Abwesenheit von Chrom, Silizium und Calcium (1. Fall) oder von Chrom, Silizium, Calcium und Bismut (2. Fall) oder von Chrom, Silizium und Bismut (3. Fall) durch Einsatz von Indium in den genannten Grenzen das oben aufgeführte Problem in hervorragender Weise lösen.

Bei Überschreitung der oberen Grenze von 0,25 Mol Indium pro Mol Edelmetall weicht der hellglänzende Edelmetall-Farbton einem unansehnlichen dunklen Ton.

Die Begriffe "chromfrei", "silizium- und calciumfrei", "silizium-, calcium- und bismutfrei" sowie "silizium- und bismutfrei" schließen im semantischen Sinne nicht vermeidbare Spuren dieser Metalle nicht zwingend aus.

Für die erfindungsgemäßen Präparate sind alle Edelmetallverbindungen geeignet, die sich in einem organischen oder anorganischen insbesondere wässrigen Trägermaterial lösen oder dispergieren und die sich thermisch zu den jeweiligen Metallen zersetzen lassen; insbesondere Resinate, Sulforesinate, Carboxylate, primäre, sekundäre und tertiäre aliphatische Mercaptide, aromatische Mercaptide, Mercaptocarboxylsäureester, Mercaptoaminocarboxylate sind geeignete Verbindungsklassen.

Als Flussmittel sind prinzipiell alle Verbindungen der oben und später noch genannten insbesondere Nichtedelmetallelemente geeignet, die sich im Trägermaterial lösen oder dispergieren lassen und die sich unabhängig von ihrer Struktur beim Einbrennen in die jeweiligen Oxide oder Metalle zersetzen. Dies sind insbesondere die Carboxylate, Resinate, Sulforesinate, Alkoholate aber auch andere Salze oder Komplexe der jeweiligen Elemente.

Die bei Einsatz der erfindungsgemäßen Glanzedelmetallpräparate nach einem jeweiligen Einbrand entstandenen Edelmetallfilme, insbesondere Goldfilme, zeichnen sich durch einen angenehmen, hellen Farbton und eine hervorragende Abriebbeständigkeit aus.

Das Glanzedelmetallpräparat kann mit dem Pinsel oder auch im Siebdruck direkt auf das zu dekorierende Geschirrteil aufgebracht werden. Die indirekte Übertragung des Präparates über Abziehbilder ist ebenso möglich.

Auch die Erzielung von matten oder seidenmatten Effekten durch Zugabe von Mattierungsmitteln beispielsweise Polyethylenwachse und Mineralien ist problemlos möglich.

Beträgt der Indiumgehalt 0,001 bis 0,1 Mol Indium pro Mol Edelmetall, insbesondere 0,001 bis 0,05 Mol Indium pro Mol Edelmetall, so erhält man in der Praxis besonders ästhetische, helle Farbtöne mit hohem Glanz und ausgezeichneter mechanischer und chemischer Beständigkeit.

Es ist von besonderem Vorteil, wenn das Glanzedelmetallpräparat mindestens ein weiteres Element aus der Gruppe Ru, Si, Zr, V, Os, Ni, Mn, Fe, Co, Bi, W, Ce, Ta, Mo, Ba, B, Pb, Ge, Ca, Ir, Al, Ti, Cu, Sn, Zn, Ga in Form organischer und/oder anorganischer Verbindungen aufweist, wobei der Gehalt an Ru, Si, Zr, V, Os, Ni, Mn, Fe, Co, Bi, W, Ce, Ta, Mo, Ba, B, Ca, Pb, Ge, Ir, Al, Ti, Cu, Sn, Zn, Ga, jeweils bis 0,4 Mol pro Mol Edelmetall beträgt, da hierdurch eine leichte Modifizierung der Glanz- und Farbtoneigenschaften sowie eine wesentliche Verbesserung der mechanischen und chemischen Beständigkeit zu bewerkstelligen ist.

Darüber hinaus ist es vorteilhaft, wenn das Glanzedelmetallpräparat thoriumfrei ist, um dieses nicht radioaktiv zu belasten und somit eine unbedenkliche Verwendung als Dekor zu gewährleisten.

Bei einem erfindungsgemäßen Verfahren zur Herstellung von dekorierten Glas-, Email-, Keramik- und Porzellan-Oberflächen aufweisenden Gegenständen durch Einbrennen eines Glanzedelmetallpräparates wird ein erfindungsgemäßes Glanzedelmetallpräparat bei einer Maximaltemperatur von kleiner oder kleiner/gleich + 900° C eingebrannt. (Mit der Angabe "kleiner" soll zum Ausdruck gebracht werden, dass die maximale Einbrandtemperatur wenige Grade Celsius unterhalb von + 900 °C liegt.)

Erfindungsgemäß liegen die Einbrandtemperaturen im Bereich von ca. + 400 °C bis ca. + 900 °C (dies gilt für alle hier vorgestellten Verfahren).

Weiterhin ist es erfindungsgemäß, wenn das erfindungsgemäße Glanzedelmetallpräparat zur Dekorierung von Glas-, Email-, Keramik- und Porzellan-Oberflächen aufweisenden Gegenständen, insbesondere bei einer Maximaltemperatur von kleiner oder kleiner/gleich + 900 °C, verwendet wird.

Eine wichtige erfindungsgemäße Verwendung ist die von Indium in insbesondere den erfindungsgemäßen Glanzedelmetallpräparaten als Rhodiumersatz und/oder zur Verringerung oder Vermeidung eines Kornwachstums und einer Agglomerierung der sich aus den Edelmetallverbindungen beim Einbrand bildenden Edelmetallpartikel.

Ein weiteres erfindungsgemäßes Verfahren ist die Herstellung von dekorierten Glas-, Email-, Keramik- und Porzellan-Oberflächen aufweisenden Gegenständen durch Einbrennen eines Glanzedelmetallpräparates bei einer Maximaltemperatur von kleiner + 900° C, wobei dieses aus einer oder mehreren organischen Edelmetallverbindungen, mindestens einem Flussmittel aus organischen und/oder anorganischen Metallverbindungen und mindestens einem Träger besteht, wobei das Glanzedelmetallpräparat
- rhodiumfrei ist oder über verunreinigende Spuren bis maximal 0,0003 Mol Rh pro Mol Edelmetall enthält,
- mindestens eine organische Gold-, Platin-, Silber- oder Palladium-Verbindung enthält,
- Indium in Form mindestens einer organischen und/oder anorganischen Verbindung aufweist, wobei der Indiumgehalt 0,001 bis 0,25 Mol pro Mol Edelmetall beträgt,
- der Edelmetallgehalt, bezogen auf das Präparat, im Bereich von 6 bis 20 Gewichts-% liegt, und
- Chrom enthält.

Die aus obigen Gründen vorteilhaften Ausgestaltungen liegen vor, wenn der Indiumgehalt 0,001 bis 0,1 Mol Indium pro Mol Edelmetall insbesondere 0,001 bis 0,05 Mol Indium pro Mol Edelmetall beträgt.

Dies gilt auch dahingehend, wenn das Glanzedelmetallpräparat mindestens ein weiteres Element aus der Gruppe Ru, Si, Zr, V, Os, Ni, Mn, Fe, Co, Bi, W, Ce, Ta, Mo, Ba, B, Pb, Ge, Ca, Ir, Al, Ti, Cu, Sn, Zn, Ga, Cr in Form organischer und/oder anorganischer Verbindungen aufweist, wobei der Gehalt an Ru, Si, Zr, V, Os, Ni, Mn, Fe, Co, Bi, W, Ce, Ta, Mo, Ba, B, Ca, Pb, Ge, Ir, Al, Ti, Cu, Sn, Zn, Ga, Cr jeweils bis 0,4 Mol pro Mol Edelmetall beträgt.

Schließlich ist es von Vorteil, wenn das Glanzedelmetallpräparat thoriumfrei ist.

Weiterhin ist die Verwendung eines Glanzedelmetallpräparates zur Dekorierung von Glas-, Email-, Keramik- und Porzellan-Oberflächen aufweisenden Gegenständen bei einer maximalen Einbrand-Temperatur von kleiner + 900 °C erfindungsgemäß, das aus einer oder mehreren organischen Edelmetallverbindungen, mindestens einem Flussmittel aus organischen und/oder anorganischen Metallverbindungen und mindestens einem Träger besteht, wobei das Glanzedelmetallpräparat
- rhodiumfrei ist oder über verunreinigende Spuren bis maximal 0,0003 Mol Rh pro Mol Edelmetall enthält,
- mindestens eine organische Gold-, Platin-, Silber- oder Palladium-Verbindung enthält,
- Indium in Form mindestens einer organischen und/oder anorganischen Verbindung aufweist, wobei der Indiumgehalt 0,001 bis 0,25 Mol pro Mol Edelmetall beträgt,
- der Edelmetallgehalt, bezogen auf das Präparat, im Bereich von 6 bis 20 Gewichts-% liegt, und
- Chrom enthält.

Die weiteren in den Ansprüchen aufgeführten Ausgestaltungen dieser Verwendung sind aus obigen Gründen vorteilhaft.

Schließlich ist die Verwendung von Indium in Glanzedelmetallpräparaten als Rhodiumersatz und/oder zur Verringerung oder Vermeidung eines Kornwachstums und einer Agglomerierung der sich aus den Edelmetallverbindungen beim Einbrand bildenden Edelmetallpartikel erfindungsgemäß, wobei es sich bei den Glanzedelmetallpräparaten um solche handelt, die aus mindestens einem Flussmittel aus organischen und/oder anorganischen Metallverbindungen und mindestens einem Träger bestehen,
- rhodiumfrei sind oder über verunreinigende Spuren bis maximal 0,0003 Mol Rh pro Mol Edelmetall enthalten,
- mindestens eine organische Gold-, Platin-, Silber- oder Palladium-Verbindung enthalten,
- Indium in Form mindestens einer organischen und/oder anorganischen Verbindung aufweisen, wobei der Indiumgehalt 0,001 bis 0,25 Mol pro Mol Edelmetall beträgt,
- der Edelmetallgehalt, bezogen auf das Präparat, im Bereich von 6 bis 20 Gewichts-% liegt, und
- Chrom enthält.

Die weiteren in den Ansprüchen aufgeführten Ausgestaltungen dieser Verwendung sind aus obigen Gründen vorteilhaft.

Die nach den erfindungsgemäßen Verfahren hergestellten und dekorierten Gegenstände weisen die oben angegebenen überraschenden und vorteilhaften Eigenschaften insbesondere den hellen Edelmetallton, den intensiven Edelmetallfilmglanz sowie die ausgezeichnete mechanische und chemische Beständigkeit auf.

Eine Übertragung auf alle üblichen Applikationsverfahren ist möglich, beispielsweise Rändergolde zur Neoprenwalzenübertragung, Tampondruckverfahren mittels Klischee- und Siebdruck, die mittels Tampon übertragen werden, die Herstellung von Abziehbilderpasten für Nassschiebebildverfahren oder Heat Releasepapier (wachsbeschichtete Papiere), Stempelverfahren.

Auch die Veränderung der Oberflächeneigenschaften durch Zugabe von Mattierungsmitteln zur Erzeugung von Seidenmattgolden und die Herstellung von Poliergolden durch Zugabe von feinen Edelmetallpulvern und anderen Mattierungsmittelzusätzen ist möglich.

Je nach Brennbereich (z.B. Glas ab T = + 450 bis + 650 °C und Porzellan zwischen T = + 700 bis 900 °C) ergeben sich unterschiedliche mechanische und optische Eigenschaften. Wie allgemein bekannt ist, ist über die Art des Bindemittels eine Optimierung dieser Eigenschaften möglich. In Frage kommen hierfür unter anderem die folgenden Harztypen:

Harnstoff-Formaldehydharze, modifizierte Harnstoff-Formaldehydharze, Melaminharze, Alkydharze, Polyurethanharze oder Epoxidharze (oder deren Mischungen), Asphalt, Kolophonium, Kolophoniumester, kolophoniummodifizierte Harze, Phenolharze, Maleinatharze, Aminoharze, Nitrocellulose, Ketonharze, natürliche Baumharze und deren Umwandlungsprodukte oder die Reaktionsprodukte der genannten Harze mit Schwefel (oder deren Mischungen) sowie geschwefelte Terpenharze.

Durch bestimmte Harzkombinationen lassen sich die optischen und mechanischen Eigenschaften nochmals verbessern. Auch ist durch Schwefeln der Harze eine Verbesserung der Ausbrennergebnisse möglich. In diesem Zusammenhang wurden verschiedene Harze mit einem Harzanteil von bis zu 30 Gewichts-% in der folgenden Rezeptur eingesetzt:

| | |
|---|---|
| Goldsulforesinat (54 Gewichts-% Au) | 22, 22 Gewichts-% |
| Silbersulforesinat (52 Gewichts-% Ag) | 2, 88 Gewichts-% |
| Indiumresinat, gelöst in Pine-Öl (4 Gewichts-% In) | 4, 00 Gewichts-% |
| Harzkomponenten | 5 - 30 Gewichts-% |
| Pine-Öl | Ausgleich auf 100 Gewichts-% |

Diese Präparate wurden auf Porzellan und Glas aufgetragen und bei T = + 820 °C bzw. T = + 580 °C eingebrannt. Besonders schöne, hellgelbe Farbtöne in Verbindung mit hochglänzenden Oberflächen wurden beispielsweise mit Kolophonium, Phenolharz, natürlichem Baumharz, Ketonharz, Kohlenwasserstoffharz, modifizierten Kolophoniumharzen und Maleinatharzen erzeugt, wobei auch durch Bindemittelmischungen aus mehreren der oben genannten Harztypen vorteilhafte Eigenschaften in bezug auf Glanz, Farbton sowie mechanische und chemische Beständigkeit erreicht werden können.

Die nachfolgenden Beispiele dienen zur Erläuterung der Erfindung.

### Beispiel 1 (Musterbeispiel für die Pinselapplikation)

| | |
|---|---|
| Goldsulforesinat (54 Gewichts-% Au) | 22, 22 Gewichts-% |
| Silbersulforesinat (52 Gewichts-% Ag) | 2, 88 Gewichts-% |
| Indiumresinat, gelöst in Pine-ÖI (4 Gewichts-% In) | 4, 00 Gewichts-% |
| Kolophoniumharz | 14, 00 Gewichts-% |
| Pine-Öl | 56, 90 Gewichts-% |

Die Komponenten werden bei T = + 80 °C gelöst und durch Pinselapplikation auf Porzellan, Bone China und Glas aufgetragen und bei T = + 820 °C bzw. T = + 580 °C eingebrannt. Es bilden sich hellgelbe, kratzfeste Dekore, wobei die Porzellan- und Bone China- Einbrände auch bei T = + 820 °C einen Zitronengoldcharakter aufweisen.

### Beispiel 2 (Musterbeispiel für den Siebdruck)

| | |
|---|---|
| Goldsulforesinat (54 Gewichts-% Au) | 22, 22 Gewichts-% |
| Silbersulforesinat (52 Gewichts-% Ag) | 2, 88 Gewichts-% |
| Indiumresinat, gelöst in Pine-Öl (4 Gewichts-% In) | 4, 00 Gewichts-% |
| Kolophoniumharz | 14, 00 Gewichts-% |
| Pine-Öl | 53, 90 Gewichts-% |
| Entschäumer | 1, 00 Gewichts-% |
| Verdickungsmittel | 2, 00 Gewichts-% |

Die Komponenten werden bei T = + 80 °C gelöst und durch Zugabe des Verdickungsmittels (beispielsweise Lösungen von modifizierten Harnstoffen) thixotropiert. Die Paste wird mit einem Polyestergewebe (130 - 34) (130 -34 ist eine sogenannte Siebklassifizierung, bei der ein entsprechendes Sieb pro Zentimeter 130 Fäden mit einer Fadenstärke von 34 µm aufweist) auf Glas, Fliesen und Porzellan aufgedruckt und bei T = + 580 °C für den Glasdekorbrand und bei T = + 820 °C für den Fliesen- bzw. Porzellandekorbrand eingebrannt. Es bilden sich hellgelbe, kratzfeste Dekore mit Zitronengoldcharakter.

(Entschäumer sind Flüssigkeiten mit niedriger Oberflächenspannung, beispielsweise Mineralöl-, Silikon- und silikonfreie Polymer-Entschäumer.)

## Patentansprüche

1. Glanzedelmetallpräparat zum Einbrennen auf Glas-, Email-, Keramik- und Porzellan-Oberflächen bei einer Maximaltemperatur von kleiner oder kleiner/gleich + 900° C, bestehend aus einer oder mehreren organischen Edelmetallverbindungen, mindestens einem Flussmittel aus organischen und/oder anorganischen Metallverbindungen und mindestens einem Träger, **dadurch gekennzeichnet, dass** das Glanzedelmetallpräparat
- rhodiumfrei ist oder über verunreinigende Spuren bis maximal 0,0003 Mol Rh pro Mol Edelmetall enthält,
- mindestens eine organische Gold-, Platin-, Silber- oder Palladium-Verbindung enthält,
- Indium in Form mindestens einer organischen und/oder anorganischen Verbindung aufweist, wobei der Indiumgehalt 0,001 bis 0,25 Mol pro Mol Edelmetall beträgt,
- der Edelmetallgehalt, bezogen auf das Präparat, im Bereich von 6 bis 20 Gewichts-% liegt, und
- chromfrei ist, wobei darüber hinaus das Präparat silizium- und calciumfrei oder silizium-, calcium- und bismutfrei oder silizium- und bismutfrei ist.

2. Glanzedelmetallpräparat nach Anspruch 1, **dadurch gekennzeichnet, dass** der Indiumgehalt 0,001 bis 0,1 Mol Indium pro Mol Edelmetall beträgt.

3. Glanzedelmetallpräparat nach Anspruch 2, **dadurch gekennzeichnet, dass** der Indiumgehalt 0,001 bis 0,05 Mol Indium pro Mol Edelmetall beträgt.

4. Glanzedelmetallpräparat nach einem der Ansprüche 1 bis 3, **dadurch gekennzeichnet, dass** dieses mindestens ein weiteres Element aus der Gruppe Ru, Si, Zr, V, Os, Ni, Mn, Fe, Co, Ca, Bi, W, Ce, Ta, Mo, Ba, B, Pb, Ge, Ir, Al, Ti, Cu, Sn, Zn, Ga, in Form organischer und/oder anorganischer Verbindungen aufweist, wobei der Gehalt an Ru, Si, Zr, V, Os, Ca, Ni, Mn, Fe, Co, Bi, W, Ce, Ta, Mo, Ba, B, Pb, Ge, Ir, Al, Ti, Cu, Sn, Zn, Ga, jeweils bis 0,4 Mol pro Mol Edelmetall beträgt.

5. Glanzedelmetallpräparat nach einem der Ansprüche 1 bis 4, **dadurch gekennzeichnet, dass** dieses thoriumfrei ist.

6. Verfahren zur Herstellung von dekorierten Glas-, Email-, Keramik- und Porzellan-Oberflächen aufweisenden Gegenständen durch Einbrennen eines Glanzedelmetallpräparates, **dadurch gekennzeichnet, dass** ein Glanzedelmetallpräparat nach einem der Ansprüche 1 bis 5 bei einer Maximaltemperatur von kleiner/gleich + 900° C eingebrannt wird.

7. Verwendung eines Glanzedelmetallpräparates nach einem der Ansprüche 1 bis 5 zur Dekorierung von Glas-, Email-, Keramik- und Porzellan-Oberflächen aufweisenden Gegenständen.

8. Verwendung eines Glanzedelmetallpräparates nach Anspruch 7 zur Dekorierung von Glas-, Email-, Keramik- und Porzellan-Oberflächen aufweisenden Gegenständen bei einer Maximaltemperatur von kleiner/gleich + 900° C.

9. Verwendung von Indium in Glanzedelmetallpräparaten als Rhodiumersatz und/oder zur Verringerung oder Vermeidung eines Kornwachstums und einer Agglomerierung der sich aus den Edelmetallverbindungen beim Einbrand bildenden Edelmetallpartikel.

10. Verwendung von Indium in Glanzedelmetallpräparaten nach einem der Ansprüche 1 bis 5 als Rhodiumersatz und/oder zur Verringerung oder Vermeidung eines Kornwachstums und einer Agglomerierung der sich aus den Edelmetallverbindungen beim Einbrand bildenden Edelmetallpartikel.

11. Verfahren zur Herstellung von dekorierten Glas-, Email-, Keramik- und Porzellan-Oberflächen aufweisenden Gegenständen durch Einbrennen eines Glanzedelmetallpräparates bei einer Maximaltemperatur von kleiner + 900° C, wobei dieses aus einer oder mehreren organischen Edelmetallverbindungen, mindestens einem Flussmittel aus organischen und/oder anorganischen Metallverbindungen und mindestens einem Träger besteht, **dadurch gekennzeichnet, dass** das Glanzedelmetallpräparat
- rhodiumfrei ist oder über verunreinigende Spuren bis maximal 0,0003 Mol Rh pro Mol Edelmetall enthält,
- mindestens eine organische Gold-, Platin-, Silber- oder Palladium-Verbindung enthält,
- Indium in Form mindestens einer organischen und/oder anorganischen Verbindung aufweist, wobei der Indiumgehalt 0,001 bis 0,25 Mol pro Mol Edelmetall beträgt,
- der Edelmetallgehalt, bezogen auf das Präparat, im Bereich von 6 bis 20 Gewichts-% liegt, und
- Chrom enthält.
